# NEUE EUROPÄISCHE PATENTSCHRIFT

(11) **EP 0 821 193 B2**
(45) Veröffentlichungstag und Bekanntmachung des Hinweises auf die Entscheidung über den Einspruch: **09.02.2005**
(45) Hinweis auf die Patenterteilung: 16.12.1998
(21) Anmeldenummer: 97109986.6
(22) Anmeldetag: 19.06.1997
(51) Int. Cl.: F16L 47/00

(54) **Anbohrarmatur für Kunststoffrohre**
Tapping fitting for plastic pipes
Appareil de perçage pour tuyaux en plastique

(30) Priorität: 25.07.1996 DE 19630028; 12.02.1997 DE 19705265; 26.03.1997 DE 19712684
(43) Veröffentlichungstag der Anmeldung: 28.01.1998
(73) Patentinhaber: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(56) Entgegenhaltungen:
- EP-B- 0 580 840
- DE-A- 4 331 817
- DE-A- 19 503 888
- DE-A- 19 531 913
- US-A- 5 345 964

## Beschreibung

Die Erfindung richtet sich auf eine Anbohrarmatur der im Oberbegriff des Anspruches 1 angegebenen Art. An Kunststoffrohre, die als Medium Gas und Wasser führen und daher unter Mediendruck stehen, ist später an einer bestimmten Stelle manchmal ein Anschluß zur Entnahme des Mediums aus dem Rohr erforderlich. Dazu verwendet man Anbohrarmaturen, deren Gehäuse an dieser Stelle des Rohres befestigt wird. Zum Anbohren besitzen diese Gehäuse einen Bohrstutzen, in welchem eine Schneidbüchse dreh- und axialbeweglich geführt ist und zum Anbohren des Kunststoffrohres dient. Das Gehäuse besitzt einen Abzweigstutzen, der nach dem Anbohren das Medium abführen soll und daher mit einem gewünschten Anschluß verbunden werden soll. Um später bedarfweise den Mediendurchlaß zum Abzweigstutzen abzusperren, verwendet man eine ventilartige Dichtstelle zwischen der Schneidbüchse und dem Rohrstutzen, die in der Ausschublage der Schneidbüchse geschlossen ist.

Bei der bekannten Vorrichtung dieser Art (DE 43 04 954 A1) besteht diese Dichtstelle aus einem stationären Dichtring im Gehäuse, der in einer an der Innenfläche des Bohrstutzens eingelassenen Innennut sitzt und mit einer Mantelfläche der Schneidbüchse zusammenwirkt. Dieser Dichtring steht im Einflußbereich des zum Abzweigstutzen strömenden Mediums und daher durch das Medium mitgerissen werden kann. Hinter dem umströmten Dichtring können sich vom strömenden Medium transportierte Partikel festsetzen und zu Ablagerungen führen, welche die Absperrwirkung bei geschlossenem Ventil beeinträchtigen können. Beim Axialbewegen der Schneidbüchse kann die scharfe Schneidkante den Dichtring treffen und beschädigen. Nach längerem Gebrauch der Anbohrarmatur kommt es vor, daß das Medium an der Kontaktzone zwischen der Umfangsfläche der metallischen Hülse und dem sie umhüllenden Kunststoff des Gehäuses eindringt, wodurch Undichtigkeiten entstehen, die grundsätzlich nicht mehr beseitigt werden können.

Bei einer Vorrichtung anderer Art (US 5 345 964 A) entsteht eine andersartige Ventildichtstelle dadurch, daß die dort vorgesehene Hülse an ihrem unteren Ende eine radiale Verengung durch einen Ventilsitz besitzt und an der Schneidbüchse eine radiale Schulter sich befindet, die bei ausgefahrener Schneidbüchse am Ventilsitz der Hülse zur Anlage kommen soll. Hier ergeben sich ähnliche Nachteile, wie bei der vorgenannten, dem Oberbegriff des Anspruches 1 entsprechenden bekannten Vorrichtung.

Der Erfindung liegt die Aufgabe zugrunde, eine preiswerte Anbohrarmatur der im Oberbegriff des Anspruches 1 genannten Art zu entwickeln, die sich zuverlässig betätigen läßt und sich auch nach längerem Gebrauch durch eine einwandfreie Dichtigkeit auszeichnet. Dies wird erfindungsgemäß durch die im Anspruch 1 angeführten Maßnahmen erreicht, denen folgende besondere Bedeutung zukommt.

Bei der Erfindung ist die Schneidbüchse Träger des Dichtungsrings, der nachfolgend kurz "Ventildichtring" bezeichnet werden soll. Der im Absperrfall damit zusammenwirkende Bereich der Hülse besteht aus einem hohlzylindrischen Endabschnitt, der nachfolgend kurz "Hohlzylinderabschnitt" genannt werden soll. Die Hülse ist folglich in diesem Bereich im wesentlichen glatt und läßt daher eine gute Strömung des Mediums aus dem angebohrten Kunststoffrohr in den Abzweigstutzen zu.

Es liegt im Absperrfall eine kraftschlüssige Verbindung zwischen der mit dem Dichtring versehenen Schneidbüchse und der Hülse vor. Eine Beschädigung des Ventildichtrings ist unmöglich, weil er an der Schneidbüchse sitzt und sich daher stets in axialem Abstand von ihrer scharfen Schneidkante befindet. Die Absperrwirkung bei geschlossenem Ventil wird durch die Kunststoffhaut im Bereich des Hohlzylinderabschnitts verbessert. Diese Kunststoffhaut sorgt aber insbesondere dafür, daß es zwischen der Hülse und dem Kunststoff nicht zu Undichtigkeiten kommen kann. Die Kunststoffhaut kann nämlich einerseits mit dem Kunststoffmaterial des Gehäuses in Verbindung stehen und andererseits in der Hülse verankert sein. Die Kunststoffhaut bildet also einen Überzug auf der Hülse. Das Medium kann die metallische Hülse nicht unterwandern. Im Absperrfall liegt der Ventildichtring an dieser Kunststoffhaut und drückt sie an die Metallhülse an, was die Verbindung der Kunststoffhaut mit der Metallhülse fördert.

Es empfiehlt sich dabei, gemäß Anspruch 2, die Kunststoffhaut an ihrer Verankerungsstelle in der Hülse durch einen sie übergreifenden konischen Ansatz zu schützen. Beim Ausfahren der Schneidbüchse wird nicht nur ihre scharfe Schneidkante, sondern auch der von ihr getragene Ventildichtring vom konischen Ansatz auf die Fläche des Hohlzylinderabschnitts geleitet. So wird vermieden, daß die Kunststoffhaut durch die Ausschubbewegung der Schneidbüchse abgestreift oder beschädigt werden kann. Dies macht sich in einer langen Lebensdauer der Anbohrarmatur bemerkbar.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1: einen Axialschnitt durch eine Anbohrarmatur nach der Erfindung in einer ersten Verwendungsform, wobei die Schneidbüchse, jeweils im Halbschnitt, in zwei unterschiedlichen Betriebspositionen gezeigt ist,
- Fig. 2: eine alternative Verwendung der in Fig. 1 gezeigten Armatur mit einem kappenartigen Gehäuseoberteil, der die Armatur drehbetätigbar macht,
- Fig. 3,: in starker Vergrößerung, ein Detail aus dem Kunststoffgehäuse der Armatur,
- Fig. 4: in einer der Fig. 3 entsprechenden Darstellung das Kunststoffgehäuse mit einer in diesem Bereich bewegten Schneidbüchse,
- Fig. 5: die analogen Verhältnisse zu Fig. 4, wenn die Schneidbüchse ihre volle Ausschublage erreicht hat und dadurch eine ventilartige Absperrung in der Armatur erreicht ist,
- Fig. 6,: in Vergrößerung und im Halbschnitt, die bei der Armatur von Fig. 1 bzw. 2 verwendete Schneidbüchse,
- Fig. 7: in einer der Fig. 6 entsprechenden Darstellung eine alternative Ausbildung der Schneidbüchse, und
- Fig. 8,: in Vergrößerung, ein weiteres Detail der in Fig. 1 gezeigten Armatur, wobei sich die Schneidbüchse in voller Einschublage befindet.

Die Anbohrarmatur umfaßt ein Gehäuse 10 aus Kunststoffmaterial 14, welches zwei rohrförmige Stutzen 11, 12 und einen Sattel 13 aufweist. Durch den Sattel 13 wird das Gehäuse 10 an einer gewünschten Anbohrstelle 41 eines Kunststoffrohres 40 zunächst durch nicht näher gezeigte mechanische Elemente, wie z. B. eine zum Sattel 13 komplementäre Schelle, befestigt. Dann kann eine elektrische Schweißverbindung zwischen dem Kunststoffmaterial 14 des Gehäuses 10 und dem Rohr 40 entstehen, wofür geeignete elektrisch aufheizbare Schweißelemente 15 an der Innenfläche des Sattels 13 integriert sein können.

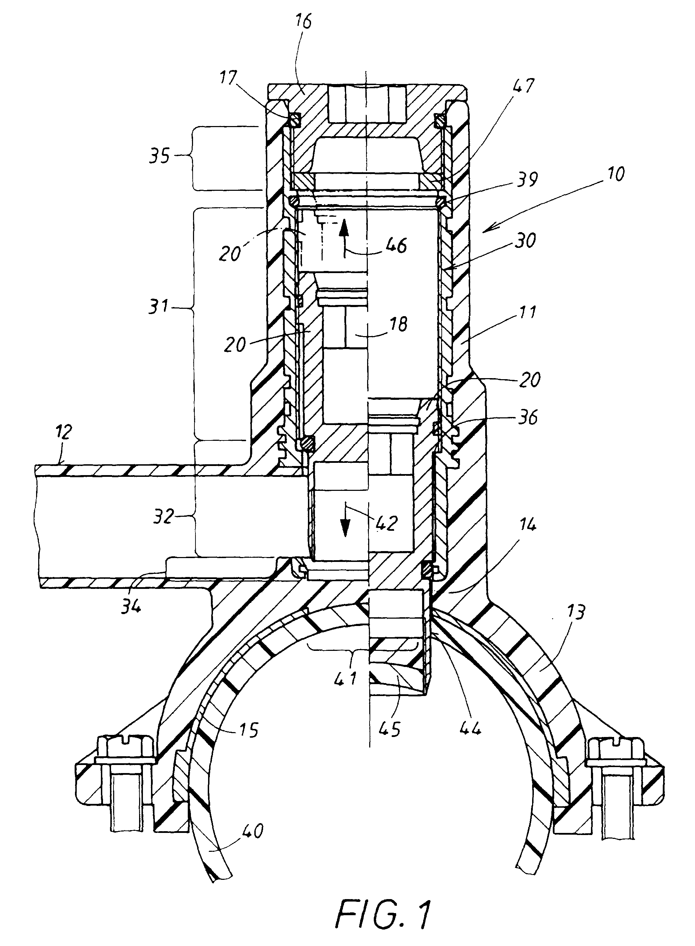

Der eine Stutzen 11 des Gehäuses 10 nimmt eine zum Anbohren dienende Schneidbüchse 20 auf und kann deshalb "Bohrstutzen" genannt werden. Zwecks Formhaltigkeit und Steifigkeit des Kunststoffprodukts ist der Bohrstutzen 11 an seiner Innenfläche mit einer metallischen Hülse 30 versehen. Diese wird bei der Spritzgußherstellung des Gehäuses 10 in das Kunststoffmaterial 14 integriert. Die Hülse 30 läßt sich, wie aus Fig. 1, 3 und 8 hervorgeht, in verschiedene axiale Zonen gliedern.

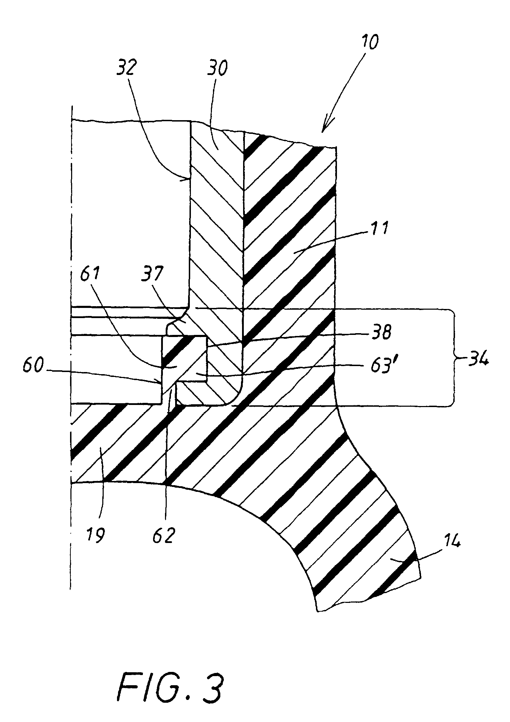

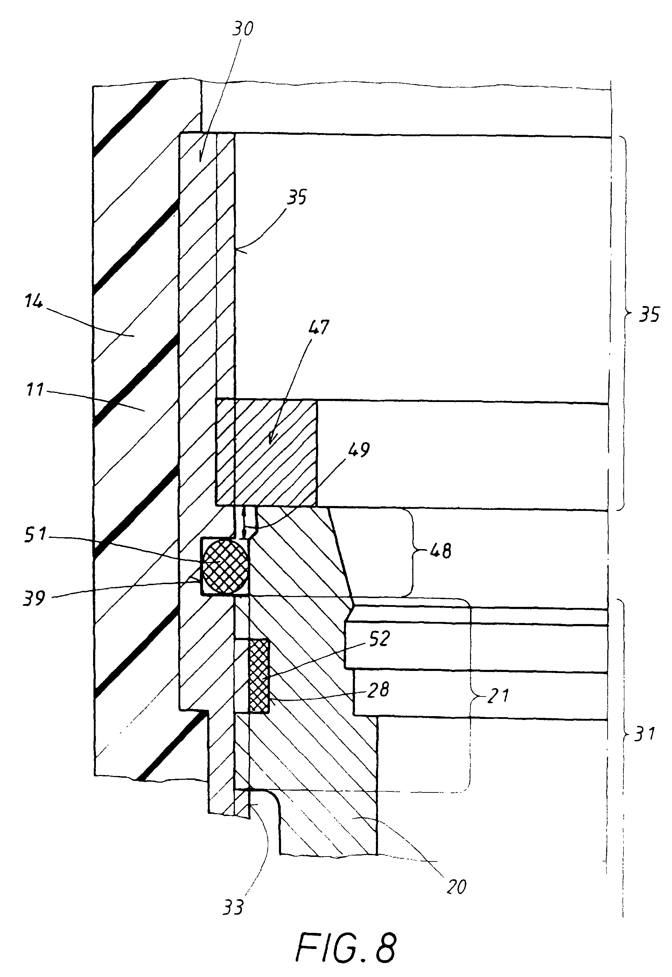

Zum Verschrauben der Schneidbüchse 20 ist eine Zone 31 der Hülse 30 mit einem Innengewinde 33 versehen und daher als "Schraubzone" zu bezeichnen. Dann schließt sich, über eine Innenschulter 36, eine in ihrem Durchmesser verengte Zone 32 der Hülse 30 an, die zur Führung der Schneidbüchse 20 dient und daher "Führungszone" genannt werden soll. Dann folgt eine Endzone 34 der Hülse, die, gemäß der Vergrößerung von Fig. 3, mit einer Ringnut 38 und einem vorgeschalteten konischen Ansatz 37 versehen ist. Am gegenüberliegenden Ende der Hülse 30 befindet sich eine Gewindeaufnahme 35 für weitere Bauteile. Wie aus der Vergrößerung von Fig. 8 zu ersehen ist, ist im Übergang zwischen dieser Gewindeaufnahme 35 und der erwähnten Schraubzone 31 eine Innennut 39 für einen Dichtring 51 vorgesehen.

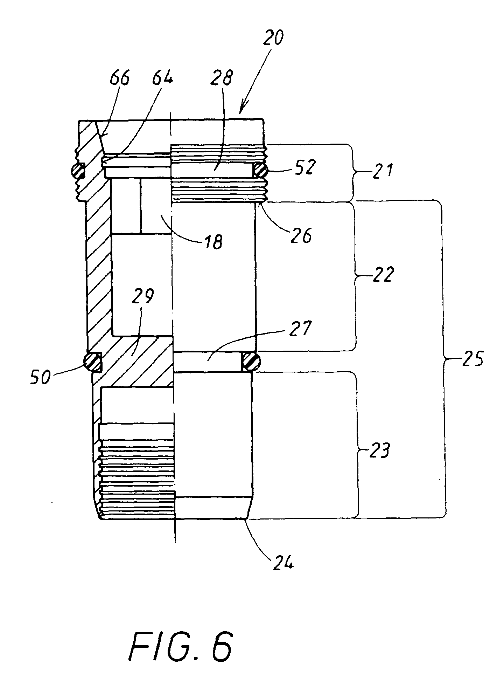

Auch die Schneidbüchse 20 läßt sich in unterschiedliche axiale Abschnitte gliedern, wie aus Fig. 6 hervorgeht. An ihrem oberen verbreiterten Kopf befindet sich ein Gewindeabschnitt 21, der im Gebrauchsfall mit dem Innengewinde 33 der Schraubzone 31 von der Hülse 30 in Eingriff steht. In diesem Gewindeabschnitt 21 befindet sich wenigstens eine Radialnut 28, in der ein Dichtring 52 sitzt. Dieser greift, wie Fig. 8 zeigt, im Gebrauchsfall in das Innengewinde 33 der Hülse 30 ein und sorgt so für die Mediendichtigkeit zwischen der Schneidbüchse 20 und der Hülse 30. Dieser Dichtring 52 kann daher als "Gewindedichtring" bezeichnet werden, um ihn von einem weiteren in Fig. 6 gezeigten Dichtring 50 der Schneidbüchse 20 zu unterscheiden. Dieser Dichtring 50 befindet sich in einer weiteren Radialnut 27, die im mittleren Bereich eines gewindefreien, glatten Mantelabschnitts 25 angeordnet ist. Diese Radialnut 26 gliedert den Mantelabschnitt 22 in zwei Teile, nämlich einen mit einer endseitigen Schneidkante 24 versehenen Bohrabschnitt 23 und einen im Gebrauchsfall mit der vorerwähnten Führungszone 32 der Hülse 30 zusammenwirkenden Zylinderabschnitt 22. Der Zylinderabschnitt 22 ist durchmessermäßig größer als der Bohrabschnitt 23 ausgebildet, geht aber über einen Radialabsatz 26 in den Gewindeabschnitt 21 über. Die Schneidbüchse 20 ist etwa im Höhenbereich ihres Dichtrings 50 mit einer Trennwand 29 geschlossen.

Fig. 1 zeigt im linken Halbschnitt die Schneidbüchse 20 vor dem Anbohren des Kunststoffrohres 40, allerdings bereits in einer mittleren Schraubposition. Nach der erwähnten Befestigung des Gehäuses 10 am Kunststoffrohr 40 wird zunächst der vom Hersteller der Armatur am Oberende des Bohrstutzens 11 sitzende Stopfen 16 entfernt. Der Stopfen 16 sitzt in der erwähnten Gewindeaufnahme 35 der Hülse 30 und trägt eine Ringdichtung 17. Nach abgeschraubtem Stopfen 16 ist die im Inneren der Armatur von Fig. 1 befindliche Schneidbüchse 20 von oben durch ein Werkzeug zugänglich. Das Drehwerkzeug, z. B. ein Sechskantschlüssel, greift in eine komplementäre, unrunde Steckaufnahme 18 der Schneidbüchse 20 ein.

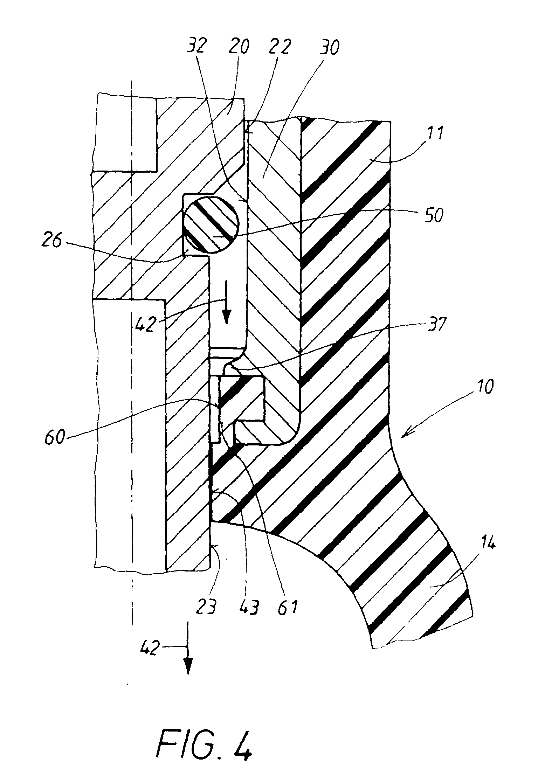

Beim Drehen des Werkzeugs in der einen Richtung wird die Schneidbüchse 20 im Sinne des Ausschubpfeils 42 herausgeschraubt. Dabei fährt die Schneidkante 24 gegen die gewünschte Bohrstelle 41 des Kunststoffrohres 40. Da im vorliegenden Fall, wie Fig. 3 zeigt, das Unterende des Bohrstutzens 11 nach der Spritzgußherstellung des Gehäuses 10 noch mit einer Angußplatte 19 verschlossen ist, wird in der Anfangsphase des Anbohrvorgangs zunächst diese ausgeschnitten und erzeugt, wie Fig. 4 verdeutlicht, einen Ausschnitt 43 im Gehäusebereich. In der Endphase des Anbohrvorgangs entsteht dann natürlich auch das im rechten Halbschnitt von Fig. 1 erkennbare Bohrloch 44. Dabei wird aus der Wand des Kunststoffrohres 40 ein Bohrkern 45 ausgeschnitten, der dann, wie der Kern des vorbeschriebenen Ausschnitts 43, ins Hülseninnere der Schneidbüchse 20 gelangt. Das erzeugte Bohrloch 44 fluchtet damit exakt mit der vom Ausschnitt 43 erzeugten Öffnung im Gehäuse 10.

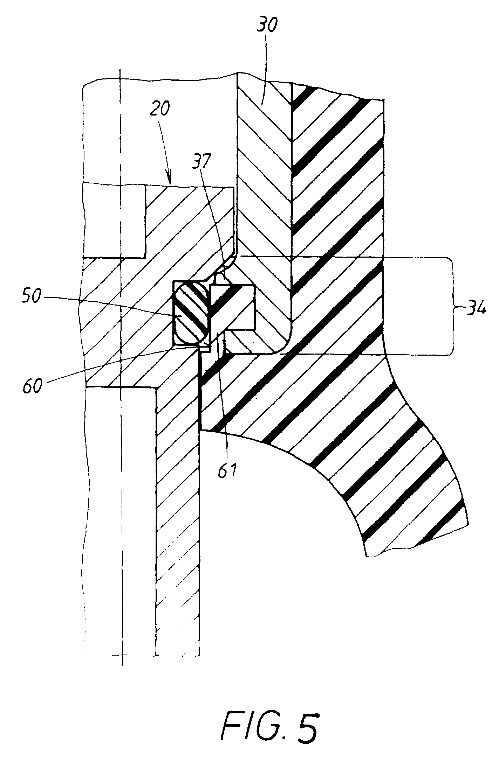

Im rechten Halbschnitt von Fig. 1 ist die Schneidbüchse 20 in ihrer vollen Ausschublage gezeigt. Diese ist dadurch bestimmt, daß sie mit ihrem Radialabsatz 26 an der vorerwähnten Innenschulter 36 der Hülse 30 anschlägt. Bei dieser Ausschubbewegung 42 der Schneidbüchse 20 wird, wie bereits erwähnt wurde, ihr Zylinderabschnitt 22 an der Führungszone 32 der Hülse 30 entlang geführt, was aus der in Fig. 4 gezeigten Zwischenlage zu ersehen ist. Dabei wird der Dichtring 50, wie Fig. 4 zeigt, mitgenommen und fährt, bevor die volle Ausschublage von Fig. 5 gezeigt ist, gegen den erwähnten konischen Ansatz 37. Der Ansatz 37 leitet den Dichtring 50 auf einen besonderen hohlzylindrischen Endabschnitt 60 in der Endzone 34 der Hülse 30. Dort liegen nämlich folgende besonderen Verhältnisse vor.

Beim Spritzgießen des mit der Hülse 30 versehenen Kunststoffgehäuses 10 gelangt das Kunststoffmaterial 14 auch auf die Innenseite der Hülsen-Endzone 34 und füllt eine dort vorgesehene Ringnut 38 oder geeignete andere Radialaussparungen aus. Es entsteht vor der metallischen Innenfläche der Hülse 40 eine Kunststoffhaut 61. Die Innenfläche dieser Kunststoffhaut 61 erzeugt den glatten hohlzylindrischen Endabschnitt 60, der nachfolgend kurz "Hohlzylinderabschnitt" bezeichnet werden soll. Die Kunststoffhaut 61 hängt fußseitig, über eine Brücke 62, mit dem Kunststoffmaterial 14 des Gehäuses zusammen und ist in der Ringnut 38 der Hülse 30 verankert. Der konische Ansatz 37 ist nur minimal; er braucht nur die Oberkante der Kunststoffhaut 61 zu überdecken. Er dient also zunächst als Auflaufschräge für den Ventildichtring 50. Er überdeckt die Kunststoffhaut 61 in axialer Richtung und sorgt dadurch dafür, daß der Ventildichtring 50 auf die zylindrische Innenfläche 60 der Kunststoffhaut 61 gehoben wird. Durch diese Überdeckung wird verhindert, daß die Schneidbüchse 20 die Kunststoffhaut 61 abstreift oder beschädigt, was wieder zu Undichtigkeiten führen würde.

Diese kunststoffbeschichtete Hohlzylinderfläche 60 ist der eine Bestandteil der hier in besonderer Weise ausgebildeten Ventildichtstelle. Der andere Bestandteil dieser Ventildichtstelle ist der vorerwähnte Dichtring 50 der Schneidbüchse 20, der daher kurz "Ventildichtring" genannt werden soll. In der in Fig. 5 gezeigten vollen Ausschublage drückt der Ventildichtring 50 gegen den kunststoffbeschichteten Hohlzylinderabschnitt 60 der Hülse und sorgt für eine überraschend gute Dichtung. Das im angebohrten Kunststoffrohr 40 unter Druck stehende Medium, z. B. Gas oder Wasser, kann nicht ohne weiteres ins Innere des Kunststoffgehäuses 10 gelangen.

Dies ergibt sich erst, wenn die Schneidbüchse 20 im Gegensinne, nämlich im Sinne des in Fig. 1 gezeigten Einschubpfeils 46 bewegt wird. Dazu verwendet man im Anwendungsfall von Fig. 1 wieder das bereits beschriebene, in der Steckaufnahme 18 der Schneidbüchse 20 steckende Drehwerkzeug, mit welchem eine Einschraubbewegung der Schneidbüchse in der Hülsen-Schraubzone 31 zustande kommt. Beim Einschrauben verläßt der Ventildichtring 50 den Hohlzylinderabschnitt 60. Damit wird die Absperrwirkung zunehmend aufgehoben und es strömt das Medium aus dem angebohrten Kunststoffrohr 40 an der Ventilhaut 61 vorbei in die Führungszone 32. In diese mündet der oben erwähnte andere Stutzen 12 des Kunststoffgehäuses 10. Das Medium gelangt daher in diesen Stutzen 12, an den weitere nicht näher gezeigte Leitungen angeschlossen sind. Der Stutzen 12 dient zum Abzweigen des Mediums aus dem Rohr 40 und ist also ein "Abzweigstutzen" für das Medium.

Die volle Einschublage der Schneidbüchse 20 ist durch einen Sicherungsring 47 begrenzt, der im vorliegenden Fall aufgrund eines Umfangsgewindes in die erwähnte Gewindeaufnahme 35 der Hülse 30 einschraubbar ist. Diese volle Einschublage der Schneidbüchse 20 ist im linken Halbschnitt von Fig. 1 strichpunktiert angedeutet und in Fig. 8 in starker Vergrößerung gezeigt. In der Einschubposition wirkt, wie Fig. 8 zeigt, der erwähnte obere Dichtring 51 mit der Schneidbüchse 20 zusammen, und zwar mit einem oberhalb ihres Gewindeabschnitts 21 befindlichen glatten Endstück 48. Dieser Dichtring 51 soll nachfolgend kurz "Hülsendichtring" bezeichnet werden. Normalerweise ist zur Medienabdichtung bereits der beschriebene Gewindedichtring 52 in der Schraubzone 31 der Schneidbüchse 20 dichtwirksam. In voller Einschraublage kommt es, durch den Hülsendichtring 51, zu einem zusätzlichen mediendichten Abschluß. In ihrem Endstück 48 kann die Schneidbüchse 20 verjüngt oder, wie im vorliegenden Fall, leicht gestuft sein und dazwischen konische Übergänge aufweisen. Zwischen dem eingeschraubten Sicherungsring 47 und der den Hülsendichtring 51 aufnehmenden Innennut 39 liegt ein kleiner axialer Abstand 49.

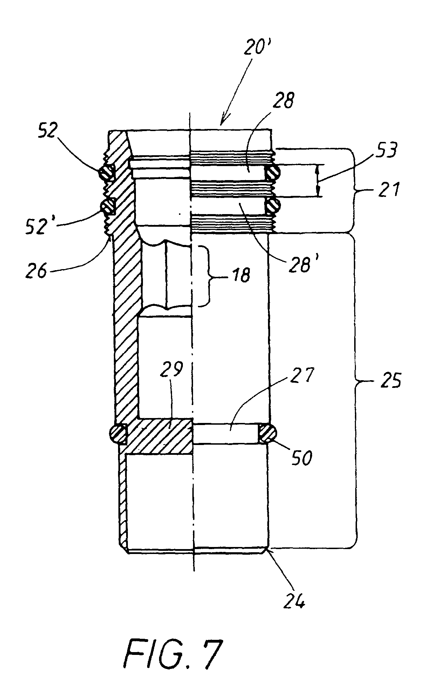

Die Fig. 7 zeigt eine abgewandelte Ausbildung 20' der vorbeschriebenen Schneidbüchse von Fig. 6. Es gilt zunächst die bisherige Beschreibung zu Fig. 6. Es genügt, bei Fig.7 lediglich auf die Unterschiede der dortigen Schneidbüchse 20' einzugehen. Der wesentlichste Unterschied besteht darin, daß in ihrem Gewindeabschnitt 21 zwei umlaufende Radialnuten 28 in einem Axialabstand 53 zueinander angeordnet sind. Jede dieser Nuten 28, 28' nimmt jeweils einen eigenen Gewindedichtring 52, 52' auf. Diese greifen in der bereits beschriebenen Weise in das Innengewinde 33 der zugehörigen Hülsen-Schraubzone 31 von Fig. 1 ein.

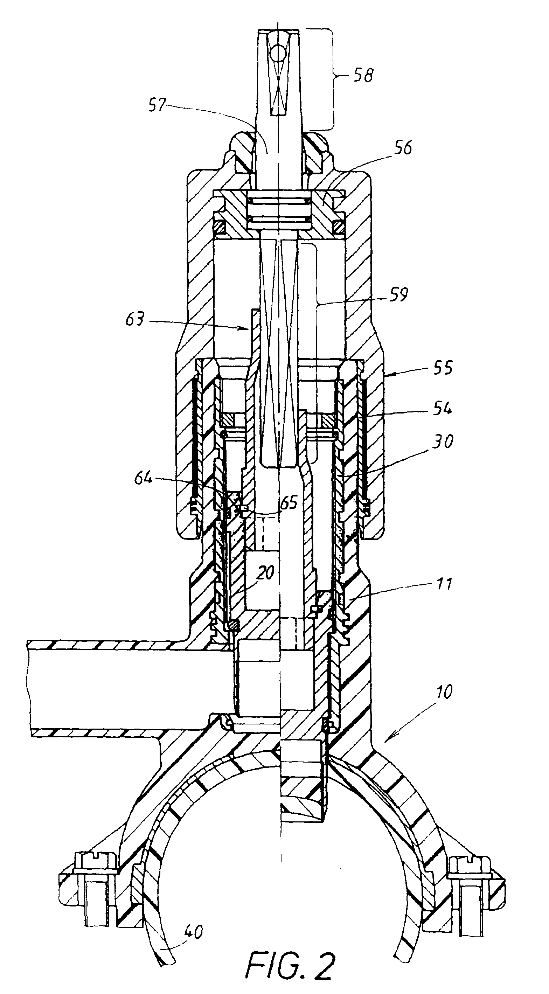

Im Anwendungsfall von Fig. 2 wird die gleiche Armatur 10 wie in Fig. 1 verwendet, weshalb insoweit die bisherigen Beschreibung gilt. Auch in diesem Fall genügt es, lediglich die Unterschiede zu Fig. 1 hervorzuheben.

In Fig. 2 ist am Oberende des Bohrstutzens 11 ein kappenförmiger Gehäuseoberteil 55 befestigt. Diese Befestigung kann durch Aufschrauben und/oder Anschweißen erzeugt werden. Für letzteres sind elektrisch erwärmbare Schweißelemente 54 in der Kappen-Innenwand des Gehäuseoberteils 55 integriert. In diesem Oberteil 55 sitzt, zweckmäßigerweise durch Anwendung weiterer Dichtungsmittel, ein Drehlager 56 für einen Schaft 57. Dieser Schaft ragt mit einem Außenende 58 aus der Kappe 55 heraus, wo er durch ein nicht näher gezeigtes Drehwerkzeug in Umdrehung versetzt werden kann. Der Schaft 57 besitzt einen Innenabschnitt 59 mit unrundem Profil, der zwar axialverschieblich aber drehfest in einen Steckadapter 63 eingreift. Der Steckadapter 63 ist durch Rastmittel drehfest und - bis zu einer bestimmten Festhaltekraft - auch axialfest in einer Schnappaufnahme 64 der Schneidbüchse 20 am oberen Ende der Schneidbüchse 20 in Eingriff. Diese besteht, wie besonders gut aus Fig. 6 zu erkennen ist, aus einer ins Innere der Büchse 20 eingelassenen Ringnut 64. Als Rastmittel 65 eignet sich ein radial federndes Glied, z. B. ein Federring. Zum selbsttätigen Einkuppeln des Steckadapters 63 an der Schneidbüchse 20 dient eine in Fig. 6 verdeutlichte Einlaufschräge 66.

Eine Rotation am Schaft-Außenende 58 wirkt sich dadurch in einer axialen Verschraubung der Büchse 20 in der Gehäuse-Hülse 30 aus. Beim Verschrauben wird der Adapter 63 von der Schneidbüchse 20 mitgenommen und teleskopiert entlang des Innenabschnitts 59 vom Schaft 57.

### Bezugszeichenliste:

- 10: Kunststoffgehäuse
- 11: Bohrstutzen
- 12: Abzweigstutzen
- 13: Sattel
- 14: Kunststoffmaterial von 10
- 15: Schweißelement bei 13
- 16: Stopfen in 11
- 17: Dichtung von 16
- 18: Steckaufnahme in 20
- 19: Angußplatte bei 11
- 20: Schneidbüchse
- 20': alternative Schneidbüchse (Fig. 7)
- 21: Gewindeabschnitt von 20
- 22: Zylinderabschnitt von 20
- 23: Bohrabschnitt von 20
- 24: Schneidkante von 23
- 25: Mantelabschnitt aus 22, 23, Mantelfläche
- 26: Radialabsatz zwischen 21, 22, Schulter
- 27: Radialnut in 25
- 28: Radialnut in 21
- 28': weitere Radialnut in 21 (Fig. 7)
- 29: Trennwand in 20
- 30: Hülse in 11
- 31: Schraubzone von 30, Innengewinde-Zone
- 32: Führungszone von 30
- 33: Innengewinde von 31
- 34: Endzone von 30
- 35: Gewindeaufnahme in 30
- 36: Innenschulter zwischen 31, 32, Gegenschulter
- 37: konischer Ansatz vor 34
- 38: Ringnut in 34
- 39: Innennut zwischen 35, 31 für 51
- 40: Kunststoffrohr
- 41: Anbohrstelle von 40
- 42: Ausschub-Pfeil, Herausschraubbewegung
- 43: Ausschnitt in 19 (Fig. 4), Öffnung
- 44: Bohrloch in 40
- 45: Bohrkern aus 40
- 46: Einschub-Pfeil, Einschraubbewegung
- 47: Sicherungsring, Endanschlag
- 48: Endstück von 20
- 49: axialer Abstand zwischen 47, 39 (Fig. 8)
- 50: Ventildichtring
- 51: Hülsendichtring
- 52: Gewindedichtring
- 52': weiterer Gewindedichtring (Fig. 7)
- 53: Axialabstand zwischen 28, 28' (Fig. 7)
- 54: Schweißelement für 55
- 55: Gehäuseoberteil, Kappe (Fig. 2)
- 56: Drehlager in 55 für 57
- 57: Schaft
- 58: Außenende von 57
- 59: unrunder Innenabschnitt von 57
- 60: Hohlzylinderabschnitt
- 61: Kunststoffhaut
- 62: Kunststoffbrücke, Verbindung zwischen 61 und 10
- 63: Steckadapter (Fig. 2)
- 64: Schnappaufnahme, Ringnut in 20
- 65: Rastmittel zwischen 63 und 64, Ringfeder
- 66: Einlaufschräge an 20 für 65 (Fig. 6)

## Patentansprüche

1. Anbohrarmatur für vorzugsweise unter Mediendruck stehende Kunststoffrohre (40),
mit einem Kunststoffgehäuse (10), das an der anzubohrenden Stelle (41) des Rohres (40) befestigbar ist,
wobei das Kunststoffgehäuse (10) einen Bohrstutzen (11) aufweist, an dessen Innenfläche eine Hülse (30) integriert ist,
und einen vom Bohrstutzen (11) ausgehenden Abzweigstutzen (12) besizt, der nach dem Anbohren medienführend ist,
und mit einer im Bohrstutzen (11) sowohl drehbeweglichen als auch axialbeweglichen Schneidbüchse (20),
die in ihrer Ausschublage eine Ventildichtstelle mit dem Bohrstutzen (11) erzeugt und dadurch einen Medienfluß zum Abzweigstutzen (12) absperrt,
wobei die Hülse (30) mit einem Innengewinde (31) für einen Gewindeabschnitt (21) der Schneidbüchse (20) versehen ist und das Innengewinde (31) zum Verschrauben der Schneidbüchse (20) im Bohrstutzen (11) des Kunststoffgehäuses (10) dient,
**dadurch gekennzeichnet,**
**daß** zur Bildung der Ventildichtstelle einerseits die Schneidbüchse (20) einen bei der Drehund Axialbewegung mitbeweglichen Ventildichtring (50) trägt
und andererseits der Bohrstutzen (11) in einer Endzone (34) der Hülse (30) einen Hohlzylinderabschnitt (60) aufweist,
der aus einem mit einer Kunststoffhaut (61) überzogene Bereich (34) der Hülse (30) besteht,
**daß** die Kunststoffhaut (61) aus dem zur Herstellung des Gehäuses (10) dienenden Kunststoffmaterial (14) gebildet ist
und **daß** in der Ausschublage der Schneidbüchse (20) der Ventildichtring (50) an der Kunststoffhaut (61) anliegt.

2. Anbohrarmatur nach Anspruch 1, **dadurch gekennzeichnet, daß** die Hülse (30) - in Ausschubrichtung (42) der Schneidbüchse (20) gesehen - vor dem Hohlzylinderabschnitt (60) einen konischen Ansatz (37) besitzt,
und daß der konische Ansatz (37) die Kunststoffhaut (61) wenigstens teilweise in axialer Richtung gegenüber dem auflaufenden Ventildichtring (50) überdeckt.

3. Anbohrarmatur nach Anspruch 1 oder 2, **dadurch gekennzeichnet, daß** die untere Endzone (34) der Hülse (30) Radialaussparungen (38) aufweist, in welchen die Kunststoffhaut (61) mit dem zu ihrer Bildung dienenden Kunststoffmaterial (14) verankert ist.

4. Anbohrarmatur nach Anspruch 3, **dadurch gekennzeichnet, daß** die Radialaussparungen aus einer Ringinnennut (38) bestehen.

5. Anbohrarmatur nach Anspruch 3 oder 4, **dadurch gekennzeichnet, daß** die Verankerung (63') der Kunststoffhaut (61) in ihrem die anzubohrende Leitung (40) abgekehrten oberen Bereich erfolgt, während die Kunststoffhaut (61) in ihrem der anzubohrenden Leitung (40) zugekehrten unteren Bereich über eine Kunststoffbrücke (62) mit dem Kunststoffmaterial (14) des Gehäuses (10) verbunden ist.

6. Anbohrarmatur nach einem oder mehreren der Ansprüche 1 bis 5, **dadurch gekennzeichnet, daß** das der anzubohrenden Leitung (40) zugekehrte Unterende des Bohrstutzens (11) zwar zunächst von einer Angußplatte (19) verschlossen ist, aber die Angußplatte (19) in der ersten Phase des Anbohrvorgangs von der Schneidbüchse (20) ausgeschnitten wird, wobei die dadurch im Gehäuse (10) entstehende Öffnung (43) mit dem beim Anbohren erzeugten Bohrloch (44) in der Leitung (40) ausgerichtet ist.

7. Anbohrarmatur nach einem oder mehreren der Ansprüche 1 bis 6, **dadurch gekennzeichnet, daß** die Schneidbüchse (20) eine zylindrische Mantelfläche (25) besitzt, in welcher sich eine Radialnut (27) zur Aufnahme des Ventildichtrings (50) befindet.

8. Anbohrarmatur nach einem oder mehreren der Ansprüche 1 bis 7, **dadurch gekennzeichnet, daß** der Hohlzylinderabschnitt (60) bei der Dreh- und Axialbewegung (42) der Schneidbüchse (20) zu ihrer Führung dient.

9. Anbohrarmatur nach einem oder mehreren der Ansprüche 1 bis 8, **dadurch gekennzeichnet, daß** die Schneidbüchse (20) in wenigstens zwei axiale Abschnitte (21, 25) gegliedert ist, nämlich einen Gewindeabschnitt (21) mit einem Außengewinde und einem glatten Mantelabschnitt (25), dessen Endstück (23) zum Anbohren dient.

10. Anbohrarmatur nach Anspruch 9, **dadurch gekennzeichnet, daß** der glatte Mantelabschnitt (25) der Schneidbüchse radial gestuft (22, 23) ist und im Stufenübergang der Ventildichtring (50) sitzt,
und daß die Hülse (30) zwischen der den Hohlzylinderabschnitt (60) bildenden Endzone (34) und der das Innengewinde (33) für die Schneidbüchse (20) aufweisenden Schraubzone (31) eine glattwandige Führungszone (32) für die Schneidbüchse (20) besitzt,
und daß der Abzweigstutzen (12) des Kunststoffgehäuses (10) von dieser Führungszone (32) ausgeht.

11. Anbohrarmatur nach einem oder mehreren der Ansprüche 1 bis 10, **dadurch gekennzeichnet, daß** die Schneidbüchse (20) im Bereich ihres Gewindeabschnitts (21) einen weiteren Gewindedichtring (52) trägt, der dichtwirksam in das Innengewinde (33) der Hülse (30) eingreift.

12. Anbohrarmatur nach Anspruch 11, **dadurch gekennzeichnet, daß** die Schneidbüchse (20) wenigstens eine Ringnut (28) zur Aufnahme des Gewindedichtrings (52) aufweist.

13. Anbohrarmatur nach einem oder mehreren der Ansprüche 1 bis 12, **dadurch gekennzeichnet, daß** die Schneidbüchse (20) eine Schulter (26) besitzt, welcher eine Gegenschulter (36) am Übergang zwischen der Innengewinde-Zone (31) und der Führungs-Zone (32) in der Hülse (30) zugeordnet ist.

14. Anbohrarmatur nach einem oder mehreren der Ansprüche 1 bis 13, **dadurch gekennzeichnet, daß** das Innere der Schneidbüchse (20) durch eine Trennwand (29) geschlossen ist und die Trennwand (29) als Sperre für das Druckmedium und/oder den aus dem Kunststoffrohr (40) ausgeschnittenen Bohrkern (45) dient.

15. Anbohrarmatur nach einem oder mehreren der Ansprüche 1 bis 14, **dadurch gekennzeichnet, daß** oberhalb der Innengewinde-Zone (31) der Hülse (30) ein oberer Hülsendichtring (51) angeordnet ist, der in voller Einschraubposition der Schneidbüchse (20) mediendicht an der Schneidbüchse (20) zur Anlage kommt.

16. Anbohrarmatur nach Anspruch 15, **dadurch gekennzeichnet, daß** der Hülsendichtring (51) in einer Innennut (39) der Hülse (30) angeordnet ist, die zwischen der zum Verschrauben der Schneidbüchse (20) dienenden nenden Innengewinde-Zone (31) und einer Gewindeaufnahme (35) für zusätzliche Bauteile (47) in der Hülse (30) andererseits liegt.

17. Anbohrarmatur nach Anspruch 16, **dadurch gekennzeichnet, daß** die Schneidbüchse (20) oberhalb ihres Gewindeabschnitts (21) ein glattwandiges Endstück (48) aufweist, dessen Umfangsfläche in der Einschraubposition am Hülsenring (51) anliegt.

18. Anbohrarmatur nach Anspruch 17, **dadurch gekennzeichnet, daß** die Umfangsfläche des Endstücks (48) sich zur oberen Stirnfläche der Schneidbüchse (20) hin verjüngt.

19. Anbohrarmatur nach Anspruch 17 oder 18, **dadurch gekennzeichnet, daß** in der oberen Gewindeaufnahme (35) der Hülse (30) ein Anschlagring (47) zur Begrenzung der Einschraubbewegung (46) der Schneidbüchse (20) zwar eingeschraubt, aber in seiner Schraubendlage fixiert ist.

## Claims

1. A pipe-tapping valve fitting for plastics pipes (40) which are preferably under pressure from a medium therein, comprising
a plastics housing (10) which can be fixed to the location (41) to be tapped of the pipe (40),
wherein the plastics housing (10) has a boring portion (11), at the inside surface of which a sleeve (30) is integrated,
and has a branch portion (12) which extends from the boring portion (11) and which after the tapping operation carries medium, and
a cutting sleeve member (20) which is both rotationally movable and also axially movable in the boring portion (11) and
which in its extended position produces a valve sealing location with the boring portion (11) and thereby shuts off a flow of medium to the bran portion (12),
wherein the sleeve (30) is provided with a female screwthread (31) for a screwthreaded portion (21) of the cutting sleeve member (20) and the female screwthread (31) serves for screwing the cutting sleeve member (20) in the boring portion (11) of the plastics housing (10)
**characterised in that** to form the valve sealing location on the one hand the cutting sleeve member (20) carries a valve sealing ring (50) which is also movable in the rotational and axial movement
and on the other hand in an end zone (34) of the sleeve (30) the boring portion (11) has a hollow-cylindrical portion (60)
which comprises a region (34) of the sleeve (30) coated with a plastics skin (61),
the plastics skin (61) is formed from the plastics material (14) which serves to produce the housing (10),
and in the extended position of the cutting sleeve member (20) the valve sealing ring (50) bears against the plastics skin (61).

2. A pipe-tapping valve fitting according to claim 1 **characterised in that** the sleeve (30) - as viewed in the direction (42) of extension of the cutting sleeve member (20) - has a conical shoulder (37) upstream of the hollow-cylindrical portion (60), and
the conical shoulder (37) covers the plastics skin (61) at least partially in the axial direction with respect to the valve sealing ring (50) which runs thereonto.

3. A pipe-tapping valve fitting according to claim 1 or claim 2 **characterised in that** the lower end zone (34) of the sleeve (30) has radial openings (38) in which the plastics skin (61) is anchored with the plastics material (14) serving for forming same.

4. A pipe-tapping valve fitting according to claim 3 **characterised in that** the radial openings comprise an internal annular groove (38).

5. A pipe-tapping valve fitting according to claim 3 or claim 4 **characterised in that** anchoring (63') of the plastics skin (61) is effected in its upper region which is remote from the conduit (40) to be tapped into while in its lower region which is towards the conduit (40) to be tapped into the plastics skin (61) is connected by way of a plastics bridge (62) to the plastics material (14) of the housing (10).

6. A pipe-tapping valve fitting according to one or more of claims 1 to 5 **characterised in that** the lower end of the boring portion (11), which is towards the conduit (40) to be tapped into, is admittedly initially closed by a plate (19) cast thereon but the cast plate (19) is cut out by the cutting sleeve member (20) in the first phase of the tapping boring operation, the opening (43) which is produced thereby in the housing (10) being aligned with the bored hole (44) produced in the tapping boring operation in the conduit (40).

7. A pipe-tapping valve fitting according to one or more of claims 1 to 6 **characterised in that** the cutting sleeve member (20) has a cylindrical peripheral surface (25) in which there is a radial groove (27) for receiving the valve sealing ring (50).

8. A pipe-tapping valve fitting according to one or more of claims 1 to 7 **characterised in that** the hollow-cylindrical portion (60) serves for guiding the cutting sleeve member (20) in the rotational and axial movement (42) thereof.

9. A pipe-tapping valve fitting according to one or more of claims 1 to 8 **characterised in that** the cutting sleeve member (20) is divided into at least two axial portions (21, 25), namely a screwthreaded portion (21) having a male screwthread and a smooth peripheral portion (25) whose end part (23) serves for the tapping boring operation.

10. A pipe-tapping valve fitting according to claim 9 **characterised in that** the smooth peripheral portion (25) of the cutting sleeve member is radially stepped (22, 23) and the valve sealing ring (50) is carried in the step transition,
and the sleeve (30) has a smooth-walled guide zone (32) for the cutting sleeve member (20) between the end zone (34) forming the hollow cylindrical portion (60) and the screwing zone (31) having the female screwthread (33) for the cutting sleeve member (20),
and the branch portion (12) of the plastics housing (10) extends from said guide zone (32).

11. A pipe-tapping valve fitting according to one or more of claims 1 to 10 **characterised in that** in the region of its screwthreaded portion (21) the cutting sleeve member (20) has a further screwthread sealing ring (52) which engages into the female screwthread (33) of the sleeve (30) in sealingly operative relationship.

12. A pipe-tapping valve fitting according to claim 11 **characterised in that** the cutting sleeve member (20) has at least one annular groove (28) for receiving the screwthread sealing ring (52).

13. A pipe-tapping valve fitting according to one or more of claims 1 to 12 **characterised in that** the cutting sleeve member (20) has a shoulder (26) with which there is associated a counterpart shoulder (36) at the transition between the zone (31) having the female screwthread and the guide zone (32) in the sleeve (30).

14. A pipe-tapping valve fitting according to one or more of claims 1 to 13 **characterised in that** the interior of the cutting sleeve member (20) is closed by a partitioning wall (29) and the partitioning wall (29) serves as a barrier for the pressure medium and/or the boring core (45) which is cut out of the plastics pipe (40).

15. A pipe-tapping valve fitting according to one or more of claims 1 to 14 **characterised in that** disposed above the zone (31) having the female screwthread of the sleeve (30) is an upper sleeve sealing ring (51 ) which in the fully screwed-in position of the cutting sleeve member (20) comes to bear against the cutting sleeve member (20) in medium-tight relationship.

16. A pipe-tapping valve fitting according to claim 15 **characterised in that** the sleeve sealing ring (51) is arranged in an internal groove (39) in the sleeve (30), which is disposed between the zone (31) having the female screwthread, which serves for screwing of the cutting sleeve member (20), and a screwthreaded receiving means (35) for additional components (47) in the sleeve (30) on the other hand.

17. A pipe-tapping valve fitting according to claim 16 **characterised in that** above its screwthreaded portion (21) the cutting sleeve member (20) has a smooth-walled end part (48) whose peripheral surface bears against the sleeve ring (51) in the screwed-in position.

18. A pipe-tapping valve fitting according to claim 17 **characterised in that** the peripheral surface of the end part (48) narrows towards the upper end face of the cutting sleeve member (20).

19. A pipe-tapping valve fitting according to claim 17 or claim 18 **characterised in that** an abutment ring (17) for limiting the screwing-in movement (46) of the cutting sleeve member (20) is admittedly screwed in the upper screwthreaded receiving means (35) of the sleeve (30), but is fixed in its screwing end position.

## Revendications

1. Organe de raccordement par perçage pour des tubes en matière plastique (40), se trouvant de préférence sous pression de fluide,
avec un boîtier en matière plastique (10), susceptible d'être fixé à l'emplacement (41) à percer du tube (40),
le boîtier en matière plastique (10) présentant un raccord de perçage (II) sur la surface intérieure duquel est intégré un manchon (30),
et une tubulure de dérivation (12) partant du raccord de perçage (11), assurant un guidage du fluide après le perçage,
et avec une douille de découpe (20) susceptible de se déplacer en rotation et axialement dans la tubulure de perçage (11) qui, dans sa position de sortie par culissement crée avec le raccord de perçage (11) un emplacement d'étanchéité de valve et bloque par conséquent un écoulement de fluide vers la tubulure de dérivation (12),
en ce que le manchon (30) est muni d'un filetage intérieur (31) destiné a un tronçon fileté (21) de la douille de découpe (20), et en ce que le filage intérieur (31)sert au vissage de la douille de découpe (20) dans la raccord de perçage (11) du boîtier en matière plastique (10).
**caractérisé en ce que**, pour constituer l'emplacement d'étanchéité de valve, d'une part, la douille de découpe (20) porte une bague d'étanchéité de valve. (50) associée lors du déplacement de rotation et axial,
et, d'autre part, le raccord de perçage (II) comporte, dans une zone d'extrémité (34) du manchon (30), un tronçon cylindrique creux (60),
constitué d'une zone (34) du manchon (30) revêtue d'une peau en matière plastique (61),
**en ce que** la peau en matière plastique (61) est constituée de la matière plastique (14) servant à fabriquer le boîtier (10),
et **en ce que** la bague d'étanchéité de valve (50) s'appuie sur la peau en matière plastique (61), lorsque la douille de découpe (20) est dans la position sortie par coulissement.

2. Organe de raccordement par perçage selon la revendication 1, **caractérisé en ce que** le manchon (30) - en observant dans la direction de la sortie par coulissement (42) de la douille de découpe (20) comporte un prolongement conique (37) devant le tronçon cylindrique creux (60),
et **en ce que** le prolongement conique (37) recouvre la peau en matière plastique (61) au moins partiellement en direction axiale par rapport à la bague d'étanchéité de valve (50) qui vient en appui sur le prolongement.

3. Organe de raccordement par perçage selon la revendication 1 ou 2, **caractérisé en ce que** la zone d'extrémité inférieure (34) du manchon (30) présente des évidements radiaux (38) dans lesquels la peau en matière plastique (6\) es! ancrée à la matière plastique (14) servant à sa constitution.

4. Organe de raccordement par perçage selon la revendication 3, **caractérisé en ce que** les évidements radiaux sont constitués d'une rainure annulaire intérieure (38).

5. Organe de raccordement par perçage selon la revendication 3 ou 4, **caractérisé en ce que** l'ancrage (63') de la peau en matière plastique (61) s'effectue dans sa zone supérieure opposée à la conduite (40) à percer, tandis que la peau en matière plastique (61) est reliée dans sa zone inférieure, tournée vers la conduite (40) Ù percer, par l'intermédiaire d'un pont en matière plastique (62), à la matière plastique (14) du boîtier (10).

6. Organe de raccordement par perçage selon l'une ou plusieurs des revendications 1 à 5, **caractérisé en ce que** l'extrémité inférieure, tournée vers la conduite (40) sur laquelle se fait le raccordement par perçage, du raccord de perçage (11), est en fait d'abord obturée par une plaque masselotte (19), et ensuite la plaque de masselotte (19) est enlevée par découpage, lors de la première phase du processus de raccordement par perçage, sous l'action de la douille de découpe (20). et **en ce que** l'ouverture (43) constituée de ce fait dans le boîtier (10) est alignée sur le trou de perçage (44) créé, lors du raccordement par perçage, dans la conduite (40).

7. Organe de raccordement par perçage selon l'une ou plusieurs des revendications 1 à 6, **caractérisé en ce que** la douille de découpe (20) comporte une surface d'enveloppe (25) cylindrique dans laquelle se trouve une gorge radiale (27) destinée à recevoir la bague d'étanchéité de valve (50).

8. Organe de raccordement par perçage selon l'une ou plusieurs des revendications 1 à 7, **caractérisé en ce que** le tronçon cylindrique creux (60) sert au guidage de la douille de découpe (20) lors du déplacement de rotation et axial (42) de celle-ci.

9. Organe de raccordement par perçage selon l'une ou plusieurs des revendications 1 à 8, **caractérisé en ce que** la douille de découpe (20) est constituée d'au moins deux tronçons axiaux (21, 25), précisément un tronçon fileté (21) portant un filetage extérieur et un tronçon d'enveloppe (25) lisse et dont la pièce d'extrémité (26) sert au raccordement par perçage.

10. Organe de raccordement par perçage selon la revendication 9, **caractérisé en ce que** le tronçon d'enveloppe (25) lisse de la douille de découpe présente un étagement radial (22, 23) qui constitue l'appui radial de transition de la bague d'étanchéité de valve (50),
et **en ce que** le manchon (30) comporte entre la zone d'extrémité (34) constituant le tronçon cylindrique creux (60) et la zone de vissage (31), présentant le filetage intérieur (33) destiné à la douille de découpe (20), une zone de guidage (32) à paroi lisse pour la douille de découpe (20),
et **en ce que** le raccord de dérivation (12) du boîtier en matière plastique (10) part de cette zone de guidage (32).

11. Organe de raccordement par perçage selon l'une ou plusieurs des revendications 1 à 10, **caractérisé en ce que** la douille de découpe (20) porte, dans la zone de son tronçon fileté (21), une autre bague d'étanchéité de filetage (52) qui vient en contact d'étanchéité, avec le filetage intérieur (33) du manchon (30).

12. Organe de raccordement par perçage selon la revendication 11, **caractérisé en ce que** la douille de découpe (20) comporte au moins une gorge annulaire (28) destinée à recevoir la bague d'étanchéité de filetage (52).

13. Organe de raccordement par perçage selon l'une ou plusieurs des revendications 1 à 12, **caractérisé en ce que** la douille de découpe (20) comporte un épaulement (26) auquel est associé un contre-épaulement (36), prévu à la transition entre la zone à filetage intérieur (31) et la zone de guidage (32), dans le manchon (30).

14. Organe de raccordement par perçage selon l'une ou plusieurs des revendications 1 à 13, **caractérisé en ce que** l'intérieur de la douille de découpe (20) est fermé par une paroi de séparation (29) et la paroi de séparation (29) sert à l'isolement du fluide sous pression et/ou du noyau de perçage (45) enlevé par découpe à partir du tube en matière plastique (40).

15. Organe de raccordement par perçage selon l'une ou plusieurs des revendications 1 à 14. **caractérisé en ce que**, au-dessus de la zone (31) à filetage intérieur du. manchon (30), est disposée une bague d'étanchéité supérieure de douille (51) qui, dans la position complètement vissée de la douille de découpe (20), vient en appui de façon étanche aux fluides sur la douille de découpe (20).

16. Organe de raccordement par perçage selon la revendication 15, **caractérisé en ce que** la bague d'étanchéité de douille (51) est disposée dans une gorgt: intérieure (39) du manchon (30) qui est située entre la zone à filetage intérieur. (3 1 ) servant au vissage de la douille de découpe (20) et un logement fileté (35) destiné Ù des composants (47) supplémentaires, dans le manchon (30), d'autre part.

17. Organe de raccordement par perçage selon la revendication 16, **caractérisé en ce que** la douille, de découpe (20) présente au-dessus de son tronçon fileté (21) une pièce d'extrémité (48) à paroi lisse dont la surface périphérique s'appuie sur la bague de douille (51), dans la position vissée.

18. Organe de raccordement par perçage selon la revendication 17, **caractérisé en ce que** la surfaçe périphérique' de la pièce d'extrémité (48) va en s'effilant en direction de la face frontale supérieure de la douille de découpe (20).

19. Organe de raccordement par perçage selon la revendication 17 ou 18. **caractérisé en ce que**, dans le logement supérieur fileté (35) du manchon (30), est vissée une bague de butée (47) destinée à limiter le déplacement de pénétration par vissage (46) de la douille de découpe (20) et qui est fixée à sa position finale de vissage.
